(19) Europäisches Patentamt
European Patent Office
Office européen des brevets

(11) Veröffentlichungsnummer: **0 259 670 B1**

(12) **EUROPÄISCHE PATENTSCHRIFT**

(45) Veröffentlichungstag der Patentschrift: **05.02.92**

(51) Int. Cl.$^5$: **C08G 63/60**, C08G 63/68, C08G 69/44, C08J 5/18

(21) Anmeldenummer: **87112077.0**

(22) Anmeldetag: **20.08.87**

(54) **Vollaromatische thermotrope Polyester und Polyesteramide.**

(30) Priorität: **28.08.86 DE 3629210**

(43) Veröffentlichungstag der Anmeldung:
**16.03.88 Patentblatt 88/11**

(45) Bekanntmachung des Hinweises auf die Patenterteilung:
**05.02.92 Patentblatt 92/06**

(84) Benannte Vertragsstaaten:
**BE DE FR GB NL SE**

(56) Entgegenhaltungen:
**EP-A- 0 131 846**
**EP-A- 0 134 956**
**EP-A- 0 139 303**
**EP-A- 0 165 399**
**EP-A- 0 226 080**
**EP-A- 0 226 847**
**EP-A- 0 230 550**
**GB-A- 2 061 304**
**GB-A- 2 158 832**

(73) Patentinhaber: **BASF Aktiengesellschaft**
**Carl-Bosch-Strasse 38**
**W-6700 Ludwigshafen(DE)**

(72) Erfinder: **Hisgen, Bernd, Dr.**
**Goethestrasse 6**
**W-6703 Limburgerhof(DE)**
Erfinder: **Kock, Hans-Jakob, Dr.**
**Benckiserstrasse 63**
**W-6700 Ludwigshafen(DE)**
Erfinder: **Portugall, Michael, Dr.**
**Raiffeisenstrasse 7**
**W-6706 Wachenheim(DE)**
Erfinder: **Seiler, Erhard, Dr.**
**Erpolzheimer Strasse 1**
**W-6700 Ludwigshafen(DE)**
Erfinder: **Blinne, Gerd, Dr.**
**Im Woogtal 7**
**W-6719 Bobenheim(DE)**

**EP 0 259 670 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft vollaromatische thermotrope Polyester und Polyester-amide auf der Basis von

A) 30 bis 60 mol% 4-Hydroxibenzoesäure

B) 20 bis 35 mol% einer Mischung aus

$B_1$) Terephthalsäure und

$B_2$) Isophthalsäure

wobei das molare Verhältnis von $B_1 : B_2$ im Bereich von 1,04:1 bis 19:1 liegt, und

C) 20 bis 35 mol% einer Mischung aus

$C_1$) Hydrochinon

$C_2$) 4,4'-Dihydroxydiphenyl

$C_3$) insgesamt 0,5 bis 5 mol% einer oder mehrerer der Komponenten

$C_{31}$) 2,7-Dihydroxynaphthalin und/oder

$C_{32}$) 1,3-Dihydroxybenzol und/oder

$C_{33}$) einer aromatischen Dihydroxyverbindung der allgemeinen Formel I

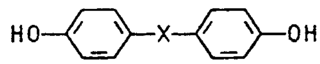 (I)

wobei X $-CH_2-$, $-C(CH_3)_2$, -S-, $-SO_2-$, -O- oder -CO- ist, oder deren kernsubstituierten Chlor-, Brom-, Aryl- oder $C_1$-$C_8$-Alkyl- oder Alkoxyderivaten, und/oder

$C_{34}$) einer Verbindung der allgemeinen Formel II

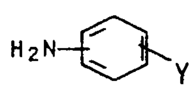

wobei Y $-NH_2$ oder -OH ist und sich die Substituenten in meta- oder para-Stellung zueinander befinden, oder deren kernsubstituierten Chlor-, Brom-, Aryl- oder $C_1$-$C_8$-Alkyl- oder Alkoxyderivaten,

das molare Verhaltnis von $C_1 : C_2$ im Bereich von 0,1:1 bis 2,67:1 und das molare Verhältnis von B:C im Bereich von 0,9:1 bis 1,1:1 liegt.

Weiterhin betrifft die Erfindung ein Verfahren zur Herstellung derartiger Polyester und Polyesteramide und deren Verwendung zur Herstellung von Fasern, Folien und Formkörpern sowie Formkörper, die die erfindungsgemäßen vollaromatischen thermotropen Polyester und/oder Polyesteramide als wesentliche Komponente enthalten.

Als "thermotrop" bezeichnet man ganz allgemein Substanzen, die flüssigkristalline Schmelzen bilden, d.h. Schmelzen mit anisotropen Eigenschaften.

Thermotrope aromatische Polyester aus aromatischen Dicarbonsäuren und Dihydroxyverbindungen sowie gegebenenfalls aromatischen Hydroxycarbonsäuren sind bekannt und z.B. in der GB-A-2 061 304, der DE-A-20 25 971, der EP-A-33 147 und der EP-A-92 843 beschrieben. Nachteilig an diesen bekannten Systemen ist der Umstand, daß sie in einem komplizierten und zeitaufwendigen mehrstufigen Prozeß hergestellt werden müssen. Auch weisen die Produkte in der Regel Schmelzpunkte oberhalb von 350 °C auf, was die thermoplastische Verarbeitung wesentlich erschwert.

In der DE-A-35 17 587 werden thermoplastische Formmassen beschrieben, die neben einem Grundharz eines Oxibenzoyl-Copolyesters eine kleinere Menge eines polymeren Fließmodifikates enthält, der aus Terephthalsäure, Isophthalsäure, 4-Hydroxybenzoesäure, Hydrochinon und 4,4'-Dihydroxydiphenyl aufgebaut ist. Die in den Beispielen beschriebenen Fließmodifikatoren weisen zum einen sehr hohe Schmelzpunkte auf (Beispiel 3: mehr als 400 °C) oder zeigen keinen kristallinen Schmelzpunkt, d.h. besitzen nur eine geringe Wärmeformbeständigkeit.

Aus der EP-A 131 846 sind thermotrope Polyester aus 4-Hydroxybenzoesäure, Iso- und/oder Terephthalsäure, 2,7-Dihydroxynaphthalin und gegebenenfalls einer weiteren Dihydroxykomponente bekannt. Diese Polyester weisen jedoch einen 2,7-Dihydroxynaphthalingehalt von mindestens 5 mol% auf, was die Kosten der Produkte verteuert ohne Vorteile hinsichtlich der Eigenschaften mit sich zu bringen.

Aufgabe der vorliegenden Erfindung war es, vollaromatische thermotrope Polyester und Polyesteramide

zur Verfügung zu stellen, die im Vergleich zu den in der DE-A-35 17 587 beschriebenen Fließmodifikatoren leichter thermoplastisch verarbeitet werden können und gleichzeitig eine verbesserte Wärmeformbeständigkeit aufweisen; im Vergleich zu den Produkten der EP-A 131 846 sollten bei gleichen oder verbesserten Eigenschaften kostengünstigere Produkte zur Verfügung gestellt werden.

Diese Aufgabe wird erfindungsgemäß durch die eingangs definierten vollaromatischen thermotropen Polyester und Polyesteramide gelöst.

Die erfindungsgemäßen vollaromatischen Polyester und/oder Polyesteramide bauen sich auf aus Einheiten, die sich von 4-Hydroxybenzoesäure (A), 3-Hydroxybenzoesäure, Terephthalsäure ($B_1$), Isophthalsäure ($B_2$), Hydrochinon ($C_1$), 4,4'-Dihydroxydiphenyl ($C_2$)und mindestens einer Verbindung $C_{31}$, $C_{32}$, $C_{33}$ oder $C_{34}$ ableiten.

Der Anteil der Komponente A (4-Hydroxibenzoesäure) liegt im Bereich von 30 bis 60, insbesondere von 35 bis 55 mol%.

Die Mischungen aus Terephthalsäure ($B_1$) und Isophthalsäure ($B_2$) , die die Komponente (B) darstellen, werden in einer Menge von 20 bis 35, vorzugsweise 22,5 bis 32,5 mol%, eingesetzt. Entsprechendes gilt auch für den Anteil der Mischung der Dihydroxyverbindungen (Komponente C).

Das molare Verhältnis der Komponenten $B_1$ :$B_2$, d.h. von Terephthalsäure zu Isophthalsäure liegt im Bereich von 1,04:1 bis 19:1, vorzugsweise von 1,5:1 bis 10:1.

Die bei der Herstellung der erfindungsgemäßen vollaromatischen Polyester und/oder Polyesteramide eingesetzte Komponente C setzt sich zusammen aus Hydrochinon ($C_1$), 4,4'-Dihydroxidiphenyl($C_2$) und mindestens einer der Verbindungen $C_{31}$, $C_{32}$, $C_{33}$ und/oder $C_{34}$.

Das molare Verhältnis von Hydrochinon ($C_1$) zu 4,4'-Dihydroxydiphenyl ($C_2$) liegt im Bereich von 0,1:1 bis 2,67:1, insbesondere von 0,5:1 bis 2,33:1.

Bei den Verbindungen $C_{31}$ und $C_{32}$ handelt es sich um 2,7-Dihydroxynaphthalin ($C_{31}$) und 1,3-Dihydroxybenzol (Resorcin; $C_{32}$).

Die Verbindungen $C_{33}$ sind aromatische Dihydroxyverbindungen der allgemeinen Formel I

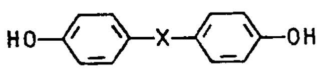

(I)

wobei X $-CH_2-$, $-C(CH_3)_2-$, -S-, $-SO_2-$, -O- oder -CO- ist, oder deren kernsubstituierte Chlor-, Brom-, Aryl- oder $C_1$-$C_8$-Alkyl- oder Alkoxyderivate.

Von diesen werden Derivate in denen X $-C(CH_3)_2-$, -S-, $-SO_2-$, -O- oder -CO- ist bevorzugt, und von diesen insbesondere 4,4'-Dihydroxydiphenylsulfon (X = $SO_2$) und 2,2-Di-(4-hydroxyphenyl)-propan (X = $C(CH_3)_2$).

Von den kernsubstituierten Derivaten werden insbesondere die Chlor- und Brom- sowie die $C_1$-$C_6$-Alkylderivate bevorzugt. Beispielhaft für diese seien hier Verbindungen der Formel

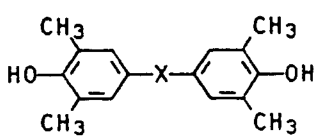

wobei X = $C(CH_3)_2$- oder $-SO_2-$ ist, sowie die entsprechenden Chlorderivate genannt.

Als Verbindungen $C_{34}$ der allgemeinen Formel II

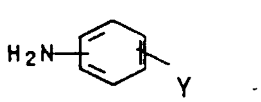

(II)

wobei Y -OH oder $-NH_2$ ist, werden 3- und 4-Aminophenol sowie 1,4-Diaminobenzol bevorzugt, insbesondere die beiden erstgenannten Verbindungen.

Substituierte Derivate der allgemeinen Formel II sind vorzugsweise wie bei den Verbindungen $C_{33}$ die $C_1$-$C_6$-Alkyl- oder Chlor- und Bromderivate wie 2-Methyl-4-aminophenol oder 2-Chlor-4-aminophenol, um nur zwei Vertreter dieser Gruppe zu nennen.

Grundsätzlich ist es möglich die Verbindungen $C_{31}$, $C_{32}$, $C_{33}$ und $C_{34}$ einzeln oder in beliebigen Mischungen einzusetzen. Vorzugsweise werden die Verbindungen einzeln eingesetzt, doch hat es sich in manchen Fällen als vorteilhaft erwiesen, Mischungen dieser Verbindungen einzusetzen.

Solche Mischungen können z.B. aus 2,7-Dihydroxynaphthalin und Resorcin, Resorcin und 2,2-Di-(4-hydroxyphenyl)-propan, Resorcin und 3- oder 4-Aminophenol bestehen, um einige bevorzugte Beispiele zu nennen.

In jedem Fall beträgt der Anteil der Komponente $C_3$, die sich aus einer oder mehreren der Verbindungen $C_{31}$, $C_{32}$, $C_{33}$ und $C_{34}$ zusammensetzt, 0,5 bis 5 mol%, bevorzugt 1 bis 4 mol.%.

Der thermotrope, d.h. flüssig-kristalline Zustand der erfindungsgemäßen vollaromatischen Polyester und Polyesteramide kann z.B. mit dem Polarisationsmikroskop nach einer in der DE-OS 25 20 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Der Schmelzpunkt der erfindungsgemäßen Polyester und Polyesteramide liegt in der Regel im Bereich von 280 bis 350, insbesondere von 300 bis 350 °C.

Die Wärmeformbeständigkeit, bestimmt nach ISO/R75, Methode B, ist im allgemeinen größer als 200 °C, insbesondere größer als 250 °C.

Der Schubmodul, bestimmt nach DIN 53 445, beträgt bei 200 °C im allgemeinen mindestens 25 %, insbesondere mindestens noch 28 % des bei 20 °C unter sonst gleichen Bedingungen gemessenen Wertes.

Die relative Viskostät der erfindungsgemäßen vollaromatischen Polyester und Polyesteramide, bestimmt in 0,1 gew.%iger Lösung in Pentafluorphenol bei 60 °C, liegt vorzugsweise im Bereich von 1 bis 4, insbesondere von 1,5 bis 3,5 dl/g.

Die erfindungsgemäßen thermotropen Polyester und Polyesteramide lassen sich prinzipiell nach an sich bekannten Verfahren herstellen, wie sie z.B. in der US-A-4 375 530 und 4 118 372 beschrieben werden.

Vorteilhafterweise wird ein Verfahren angewandt, bei dem man die Ausgangsstoffe A, $B_1$, $B_2$, $C_1$, $C_2$ und $C_3$ in Gegenwart eines 5- bis 60 %igen molaren Überschusses eines Anhydrids einer Alkancarbonsäure mit 2 bis 6 C-Atomen einer einstufigen Polykondensation in der Schmelze unterwirft. Der molare Überschuß an Anhydrid bezieht sich dabei auf den Gesamtgehalt an OH-Gruppen in der Monomermischung.

Von den Anhydriden der Alkancarbonsäuren mit 2 bis 6 C-Atomen werden Essigsäureanhydrid, Propionsäureanhydrid und Buttersäureanhydrid, und ganz besonders Essigsäureanhydrid bevorzugt. Der molare Überschuß an Säureanhydrid beträgt vorzugsweise 10 bis 50 mol%.

Es hat sich auch als vorteilhaft herausgestellt, die Umsetzung unter Inertgasatmosphäre, z.B. Stickstoff oder Argon, durchzuführen.

Manchmal ist es vorteilhaft, durch Verwendung von Katalysatoren, z.B. solchen wie sie in der EP-A-131 846 beschrieben werden, die Umsetzung zu beschleunigen. In diesem Fall beträgt der Anteil dieser Katalysatoren 0,001 bis 1 Gew.%, bezogen auf die Gesamtmenge der eingesetzten Monomeren.

Im folgenden wird eine besonders bevorzugte Ausführungsform eines Verfahrens beschrieben.

Die Monomeren A, $B_1$, $B_2$, $C_1$, $C_2$ und $C_3$ und das Carbonsäureanhydrid werden unter Inertgasatmosphäre vermischt und unter Rühren bis zum Rückfluß erhitzt. Dabei ist es vorteilhaft, die Temperatur stufenweise zu steigern indem man zunächst bis zu 5 Stunden, vorzugsweise bis zu 2 Stunden bei einer Temperatur von 130 bis 200 °C hält und anschließend die Temperatur vorzugsweise innerhalb eines Zeitraums von 2 bis 2,5 Stunden auf 250 bis 370 °C erhöht. Dabei werden im Verlauf der Reaktion überschüssiges Carbonsäureanhydrid und gebildete Carbonsäuren abdestilliert.

Um eine möglichst quantitative Umsetzung zu erreichen, ist es vorteilhaft, in der letzten Phase der Reaktion bei verringertem Druck, vorzugsweise im Bereich von 0,1 bis 200 mbar (10 bis 20.000 Pa) zu arbeiten.

Die so erhaltenen vollaromatischen Polyester und/oder Polyesteramide können anschließend einer Nachkondensation in fester Phase unterworfen werden. Diese wird vorzugsweise bei Temperaturen im Bereich von 200 bis 300 °C, vorzugsweise von 200 bis 280 °C, vorgenommen. Es ist auch möglich, die Nachkondensation in fester Phase nach einer thermoplastischen Verarbeitung vorzunehmen.

Vorteilhafterweise wird auch die Kondensation in fester Phase in Inertgasatmosphäre, z.B. unter Stickstoff oder Argon, durchgeführt.

Das vorstehend beschriebene Verfahren zeichnet sich dadurch aus, daß in einer Stufe in einer relativ kurzen Zeit vollaromatische Polyester und/oder Polyesteramide mit vorteilhaften Eigenschaften erhalten werden.

Den erfindungsgemäßen vollaromatischen Polyestern und Polyesteramiden können übliche Zusatzstoffe und Verarbeitungshilfsmittel zugesetzt werden. Hier seien nur Stabilisatoren gegen Oxidation, Wärme, UV-Licht, Gleit- und Entformungsmittel, Farbstoffe und Pigmente, faser- oder pulverförmige Füllstoffe und

Verstärkungsmittel, Keimbildungsmittel, Nukleierungsmittel, oder Weichmacher genannt. Derartige Zusätze sind an sich bekannt und in der Literatur beschrieben.

Als Beispiele für Oxidationsverzögerer und Wärmestabilisatoren seien nur Halogenide von Metallen der Gruppe I des Periodensystems, gegebenenfalls in Abmischung mit Kupfer-I-halogeniden oder sterisch gehinderten Phenolen in Konzentrationen bis zu 1 Gew.% angeführt.

Als UV-Stabilisatoren sind substituierte Resorcine, Salicylate, Benzotriazole, Benzophenone sowie deren Mischungen geeignet, die im allgemeinen in Mengen bis zu 2 Gew.% zugesetzt werden.

Farbstoffe und Pigmente werden im allgemeinen in Mengen bis zu 5 Gew.% eingesetzt. Als Beispiele seien Nigrosin, Titandioxid, Cadmiumsulfid, Phthalocyaninfarbstoffe, Ultramarinblau oder Ruß genannt.

Füllstoffe und Verstärkungsmittel sind beispielsweise Kohlenstoffasern, Glasfasern, amorphe Kieselsäure, Calciumsilikat, Aluminiumsilikat, Magnesiumcarbonat, Kaolin, Kreide, gepulverter Quarz, Glimmer und Feldspat die bis zu 70 Gew.%, bezogen auf das Gesamtgewicht der gefüllten Masse ausmachen können.

Als Keimbildungsmittel seien Talkum, Calciumfluorid, Natriumphenylphosphinat, Aluminiumoxid und feinteiliges Polytetrafluorethylen genannt.

Weiterhin können bis zu 20 Gew.% Weichmacher wie Phthalsäureester. Kohlenwasserstofföle und Sulfonamide eingesetzt werden.

Die erfindungsgemäßen vollaromatischen Polyester und Polyesteramide und die daraus hergestellten Formteile weisen eine hervorragende Wärmeformbeständigkeit und eine glatte, glänzende und abriebfeste Oberfläche bei heller Eigenfarbe auf. Außerdem sind sie weitgehend chemikalienbeständig, schwer entflammbar und besitzen eine für Polyester und Polyesteramide ausgezeichnete Hydrolysestabilität.

Aus den erfindungsgemäßen vollaromatischen Polyestern und/oder Polyesteramiden hergestellte Formkörper zeichnen sich durch hervorragende mechanische Eigenschaften, insbesondere Steifigkeit, Festigkeit und Zähigkeit aus. Die vollaromatischen Polyester und Polyesteramide eignen sich daher besonders zur Herstellung von Formkörpern für die Elektro- und Datentechnik, den Fahrzeugbau und andere technische Bereiche.

Daneben können aus den erfindungsgemäßen Polyestern und Polyesteramiden Fasern und Folien mit einem guten Eigenschaftsspektrum hergestellt werden.

Die Verarbeitung der erfindungsgemäßen Polyester und Polyesteramide kann in der Regel bei Temperaturen von unterhalb 370 °C durch Spritzguß, Pressen oder Extrusion erfolgen.

Beispiel 1

Zur Herstellung des erfindungsgemäßen Polyesters wurden folgende Komponenten eingesetzt:

4,5 mol (42,85 mol%) 4-Hydroxibenzoesäure
2,7 mol (25,73 mol%) Terephthalsäure
0,3 mol ( 2,85 mol%) Isophthalsäure
1,5 mol (14,29 mol%) Hydrochinon und
1,2 mol (11,43 mol%) 4,4'-Dihydroxydiphenyl
0,3 mal ( 2,85 mol%) 1,3-Dihydroxybenzol (Resorcin)

Diese Komponenten wurden zusammen mit 1350 ml (14,3 mol) Essigsäureanhydrid in einem 5 1-Reaktionskessel unter Stickstoff vorgelegt. Unter Rühren wurde innerhalb von 30 min auf 150 °C, anschließend innerhalb von 150 min auf 345 °C Außentemperatur weiter erhitzt. Im Anschluß daran wurde der Druck auf 600 mbar und im weiteren Verlauf jeweils innerhalb von 10 min auf die Hälfte des vorherigen Wertes reduziert. Die Außentemperatur wurde dabei auf 360 °C erhöht.

Der Enddruck betrug 75 mbar.

Die inhärente Viskosität des erhaltenen Polyesters betrug 1,8 dl/g, gemessen in 0,1 gew.%iger Lösung in Pentafluorphenol bei 60 °C.

Der Polyester bildete eine fadenbildende mesomorphe Schmelze.

Aus DSC-Messungen (Differential Scanning Calorimetry) ergab sich ein Schmelzpunkt von 345 °C.

Das Polymere ließ sich bei 360 °C problemlos im Spritzguß verarbeiten.

Die Wärmeformbeständigkeit nach ISO/R75 betrug nach Methode B mehr als 250 °C.

Der Schubmodul nach DIN 53 445 bei 200 °C betrug noch 32 % des unter sonst identischen Bedingungen bei 20 °C gemessenen Wertes.

Beispiel 2

Es wurden folgende Komponenten eingesetzt:

4,5 mol (42.85 mol%) 4-Hydroxibenzoesäure

2,7 mol (25,74 mol%) Terephthalsäure
0,3 mol ( 2,85 mol%) Isophthalsäure
1,5 mol (14,28 mol%) Hydrochinon und
1,2 mol (11,43 mol%) 4,4'-Dihydroxydiphenyl
0,3 mol ( 2,85 mol%) 2,7-Dihydroxynaphthalin

Die Ausgangsverbindungen wurden zusammen mit 1330 ml (14,1 mol) Essigsäureanhydrid vermischt und wie in Beispiel 1 beschrieben umgesetzt.

Die Endtemperatur betrug 360 °C und der Enddruck 20 mbar.

Die inhärente Viskosität wurde zu 2,2 dl/g, bestimmt wie in Beispiel 1, gemessen.

Der Schmelzpunkt (aus DSC-Messungen) lag bei 330 °C.

Das Polymere ließ sich bei 340 °C problemlos im Spritzguß verarbeiten; die Wärmeformbeständigkeit nach ISO/R75 betrug 248 °C nach Methode B mehr als 250 °C.

Der Schubmodul nach DIN 53 445 betrug bei 200 °C noch 36 % des unter sonst identischen Bedingungen bei 20 °C gemessenen Wertes.

Beispiel 3

Es wurden folgende Ausgangsverbindungen eingesetzt:

4,5 mol (42,85 mol%) 4-Hydroxibenzoesäure
2,4 mol (22,89 mol%) Terephthalsäure
0,6 mol ( 5,70 mol%) Isophthalsäure
1,5 mol (14,28 mol%) Hydrochinon und
1,2 mol (11,43 mol%) 4,4'-Dihydroxydiphenyl
0,3 mol ( 2,85 mol%) Resorcin

Die Ausgangskomponenten wurden zusammen mit 1320 ml (14 mol) Essigsäureanhydrid wie in Beispiel 1 beschrieben umgesetzt. Die Endtemperatur betrug 360 °C und der Enddruck 50 mbar.

Die inhärente Viskosität des erhaltenen Produkts, bestimmt wie in Beispiel 1, betrug 1,7 dl/g, der Schmelzpunkt aus DSC-Messungen ergab sich zu 325 °C und der Schubmodul nach DIN 53 445 betrug bei 200 °C noch 28 % des Werts der bei 20 °C bestimmt wurde.

Das Polymere ließ sich bei 350 °C problemlos im Spritzguß verarbeiten.

Beispiel 4

Zur Herstellung des erfindungsgemäßen Polyesteramids wurden folgende Komponenten eingesetzt:

4,5 mol (42,85 mol%) 4-Hydroxibenzoesäure
2,4 mol (22,88 mol%) Terephthalsäure
0,6 mol ( 5,70 mol%) Isophthalsäure
1.2 mol (11,43 mol%) Hydrochinon und
1,5 mol (14,29 mol%) 4,4'-Dihydroxydiphenyl
0,3 mol ( 2,85 mol%) 4-Aminophenol

Diese Komponenten wurden zusammen mit 1330 ml (14,1 mol] Essigsäureanhydrid in einem 5 1-Reaktionskessel unter Stickstoff vorgelegt. Unter Rühren wurde innerhalb von 30 min auf 150 °C, anschließend innerhalb von 150 min auf 350 °C Außentemperatur weiter erhitzt. Im Anschluß daran wurde der Druck auf 690 mbar und im weiteren Verlauf jeweils innerhalb von 10 min auf die Hälfte des vorherigen Wertes reduziert. Die Außentemperatur wurde dabei auf 360 °C erhöht.

Der Enddruck betrug 43 mbar.

Die inhärente Viskosität des erhaltenen Polyesteramids betrug 2,3 dl/g, gemessen in 0,1 gew.%iger Lösung in Pentafluorphenol bei 60 °C.

Das Polyesteramid bildete eine fadenbildende mesomorphe Schmelze.

Aus DSC-Messungen (Differential Scanning Calorimetry) ergab sich ein Schmelzpunkt von 345 °C.

Das Polymere ließ sich bei 360 °C problemlos im Spritzguß verarbeiten.

Die Wärmeformbeständigkeit nach ISO/R75 betrug nach Methode B mehr als 250 °C.

Der Schubmodul nach DIN 53 445 bei 200 °C betrug noch 31 % des unter sonst identischen Bedingungen bei 20 °C gemessenen Wertes.

Beispiel 5

Es wurden folgende Komponenten eingesetzt:

4,5 mol (42,85 mol%) 4-Hydroxibenzoesäure
2,7 mol (25,74 mol%) Terephthalsäure
0,3 mol ( 2,85 mal]) Isophthalsäure
1,5 mol (14,28 mol%) Hydrochinon und
1,2 mol (11,43 mol%) 4,4'-Dihydroxydiphenyl
0,3 mol ( 2,85 mol%) 3-Aminophenol
Die Ausgangsverbindungen wurden zusammen mit 1330 ml (14,1 mal) Essigsäureanhydrid vermischt und wie in Beispiel 1 beschrieben umgesetzt.

Die Endtemperatur betrug 360 °C und der Enddruck 45 mbar,

Die inhärente Viskosität wurde zu 2,2 dl/g, bestimmt wie in Beispiel 1, gemessen.

Der Schmelzpunkt (aus DSC-Messungen) betrug 330 °C.

Das Polymere ließ sich bei 350 °C problemlos im Spritzguß verarbeiten; die Wärmeformbeständigkeit nach ISO/R75 betrug nach Methode B mehr als 250 °C.

Der Schubmodul nach DIN 53 445 betrug bei 200 °C noch 36 % des unter sonst identischen Bedingungen bei 20 °C gemessenen Wertes.

Vergleichsbeispiel 1 (Beispiel 3 der DE-OS 35 17 587)

Es wurden folgende Komponenten eingesetzt:
0,306 mol (50 mol%) 4-Hydroxybenzoesäure
0,134 mol (21,85 mol%) Terephthalsäure
0,019 mol ( 3,03 mol%) Isophthalsäure und
0,154 mol (25,12 mol%) 4,4'-Dihydroxydiphenyl
Die Komponenten werden mit 67,4 ml Essigsäureanhydrid wie in Beispiel 1 beschrieben umgesetzt.

Die Endtemperatur außen betrug 360 °C, der Enddruck 8 mbar.

Im Gegensatz zu den Beispielen 1 bis 6, in denen nach der Reaktion eine fadenbildende mesomorphe Schmelze erhalten wurde, war das Reaktionsprodukt in diesem Fall fest und besaß eine grau-gelbe Farbe.

Das Polymere konnte bis 400 °C nicht geschmolzen werden und war in Pentafluorphenol unlöslich, so daß auch keine relative Viskosität bestimmt werden konnte.

Ein nach dem Verfahren in der DE-A-35 17 587 (Beispiel 3) hergestelltes Produkt der gleichen Zusammensetzung war ebenfalls bis 400 °C nicht schmelzbar und damit unterhalb dieser Temperatur thermoplastisch nicht zu verarbeiten.

Vergleichsbeispiel 2 (Beispiel 4 aus DE-A-35 17 587)

Es wurden folgende Komponenten eingesetzt:
0,37 mol (64,92 mol%) 4-Hydroxybenzoesäure
0,1 mol (17,54 mol%) Isophthalsäure und
0,1 mol (17,54 mol%) 4,4'-Dihydroxydiphenyl
Die Komponenten wurden mit 62 ml Essigsäureanhydrid wie in Beispiel 1 beschrieben umgesetzt.

Die Endtemperatur betrug in diesem Fall 330 °C, der Enddruck 53 mbar.

Die inhärente Viskosität des erhaltenen Produkts betrug 1,9 dl/g, und das Polymere zeigte eine gute Fadenbildungstendenz aus der anisotropen Schmelze.

Der Schubmodul nach DIN 53 445 betrug bei 200 °C jedoch lediglich noch 0,6 % des unter sonst identischen Bedingungen bei 20 °C gemessenen Werts.

Die vorstehenden Beispiele zeigen, daß sich die erfindungsgemäßen vollaromatischen Polyester und Polyesteramide insbesondere im Vergleich zu den aus DE-A-35 17 587 bekannten Produkten durch ein insgesamt wesentlich verbessertes Eigenschaftsspektrum auszeichnen.

**Patentansprüche**

**1.** Vollaromatische thermotrope Polyester und Polyesteramide auf der Basis von

A) 30 bis 60 mol% 4-Hydroxibenzoesäure
B) 20 bis 35 mol% einer Mischung aus
$B_1$) Terephthalsäure und
$B_2$) Isophthalsäure

wobei das molare Verhaltnis von $B_1 : B_2$ im Bereich von 1,04:1 bis 19:1 liegt, und

C) 20 bis 35 mol% einer Mischung aus
$C_1$) Hydrochinon
$C_2$) 4,4'-Dihydroxydiphenyl und
$C_3$) insgesamt 0,5 bis 5 mol% einer oder mehrerer der Komponenten
$C_{31}$) 2,7-Dihydroxynaphthalin und/oder
$C_{32}$) 1,3-Dihydroxybenzol und/oder
$C_{33}$) einer aromatischen Dihydroxyverbindung der allgemeinen Formel I

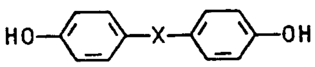

(I)

wobei X $-CH_2-$, $-C(CH_3)_2$, -S-, $-SO_2-$, -O- oder -CO-ist,
oder deren kernsubstituierten Chlor-, Brom-, Aryl- oder $C_1$-$C_8$-Alkyl- oder Alkoxyderivaten, und/oder
$C_{34}$) einer Verbindung der allgemeinen Formel II

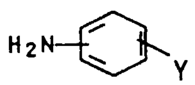

(II)

wobei Y $-NH_2$ oder -OH ist und sich die Substituenten in meta- oder para-Stellung zueinander befinden, oder deren kernsubstituierten Chlor-, Brom-, Aryl- oder $C_1$-$C_8$-Alkyl- oder Alkoxyderivaten,

wobei das molare Verhältnis von $C_1 : C_2$ im Bereich von 0,1:1 bis 2,67:1 und das molare Verhältnis von B:C im Bereich von 0,9:1 bis 1,1:1 liegt.

**2.** Vollaromatische thermotrope Polyester nach Anspruch 1, dadurch gekennzeichnet, daß die Komponente $C_3$ 2,7-Dihydroxynaphthalin ($C_{31}$) und/oder 1,3-Dihydroxybenzol ($C_{32}$)ist.

**3.** Vollaromatische thermotrope Polyester gemäß Anspruch 1, dadurch gekennzeichnet, daß $C_3$ eine aromatische Dihydroxyverbindung der allgemeinen Formel I ist, wobei X $-C(CH_3)_2$, -S-, $-SO_2-$, -O- oder -CO-ist.

**4.** Vollaromatische thermotrope Polyesteramide nach Anspruch 1, dadurch gekennzeichnet, daß die Komponente $C_{34}$ 4-Aminophenol und/oder 3-Aminophenol ist.

**5.** Vollaromatische thermotrope Polyester und Polyesteramide nach den Ansprüchen 1 bis 4, dadurch gekennzeichnet, daß das molare Verhältnis der Komponenten $B_1 : B_2$ im Bereich von 1,5:1 bis 10:1 liegt.

**6.** Vollaromatische thermotrope Polyester und Polyesteramide nach den Ansprüchen 1 bis 5, dadurch gekennzeichnet, daß das molare Verhältnis der Komponenten $C_1 : C_2$ im Bereich von 0,5:1 bis 2,33:1 liegt.

**7.** Vollaromatische thermotrope Polyester und Polyesteramide nach den Ansprüchen 1 bis 6, erhältlich durch einstufige Polykondensation der Komponenten A, $B_1$, $B_2$, $C_1$, $C_2$ und $C_3$ in der Schmelze in Gegenwart eines 5 bis 60 %igen molaren Überschusses, bezogen auf den Gesamtgehalt an OH-Gruppen, von Anhydriden von Alkancarbonsäuren mit 2 bis 6 C-Atomen.

**8.** Verfahren zur Herstellung von vollaromatischen thermotropen Polyestern und Polyesteramiden gemäß den Ansprüchen 1 bis 7 durch einstufige Polykondensation in der Schmelze in Gegenwart von Anhydriden von Alkancarbonsäuren mit 2 bis 6 C-Atomen, dadurch gekennzeichnet, daß man

a) die Komponenten A, $B_1$, $B_2$, $C_1$, $C_2$ und $C_3$ in Gegenwart eines 5 bis 60 %igen molaren Überschusses, bezogen auf den Gesamtgehalt an OH-Gruppen, der Anhydride der Alkancarbonsäuren umsetzt und, gegebenenfalls,
b) die erhaltenen Produkte einer Nachkondensation in fester Phase unterwirft.

**9.** Verwendung der vollaromatischen thermotropen Polyester und Polyesteramide gemäß den Ansprüchen 1 bis 7 oder wie nach Anspruch 8 erhalten zur Herstellung von Fasern, Fäden, Folien und Formkörpern.

**10.** Dimensionsstabile Formkörper, enthaltend als wesentliche Komponente vollaromatische thermotrope Polyester und/oder Polyesteramide gemäß den Ansprüchen 1 bis 7 oder wie gemäß Anspruch 8 erhalten.

## Claims

**1.** A fully aromatic thermotropic polyester and polyesteramide based on:
A) from 30 to 60 mol % of 4-hydroxybenzoic acid,
B) from 20 to 35 mol % of a mixture of
$B_1$) terephthalic acid and
$B_2$) isophthalic acid,
the molar ratio of $B_1$ to $B_2$ being from 1.04:1 to 19:1, and
C) from 20 to 35 mol % of a mixture of
$C_1$) hydroquinone,
$C_2$) 4,4'-dihydroxydiphenyl and
$C_3$) a total of from 0.5 to 5 mol % of one or more of the components
$C_{31}$) 2,7-dihydroxynaphthalene or
$C_{32}$) 1,3-dihydroxybenzene or
$C_{33}$) an aromatic dihydroxy compound of the formula I

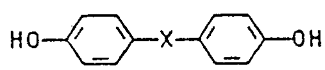

(I)

where X is $-CH_2-$, $-C(CH_3)_2$, -S-, $-SO_2-$, -O-or -CO-, or their chlorine, bromine, aryl or $C_1$-$C_8$-alkyl or alkoxy derivatives which are substituted in the nucleus, or
$C_{34}$) a compound of the formula II

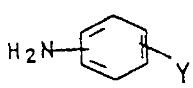

(II)

where X is $-NH_2$ or -OH and the substituents are meta or para to one another, or their chlorine, bromine, aryl or $C_1$-$C_8$-alkyl or alkoxy derivatives which are substituted in the nucleus,
the molar ratio of $C_1$ to $C_2$ being from 0.1:1 to 2.67:1 and the molar ratio of B to C being from 0.9:1 to 1.1:1.

**2.** A fully aromatic thermotropic polyester as claimed in claim 1, wherein the component $C_3$ is 2,7-dihydroxynaphthalene ($C_{31}$) and/or 1,3-dihydroxybenzene ($C_{32}$).

**3.** A fully aromatic thermotropic polyester as claimed in claim 1, wherein $C_3$ is an aromatic dihydroxy compound of the formula I, where X is $-C(CH_3)_2$, -S-, $SO_2$, -O- or -CO-.

**4.** A fully aromatic thermotropic polyesteramide as claimed in claim 1, wherein the component $C_{34}$ is 4-aminophenol and/or 3-aminophenol.

**5.** A fully aromatic thermotropic polyester and polyesteramide as claimed in any of claims 1 to 4, wherein the molar ratio of components $B_1$ to $B_2$ is from 1.5:1 to 10:1.

**6.** A fully aromatic thermotropic polyester and polyesteramide as claimed in any of claims 1 to 5, wherein the molar ratio of components $C_1$ to $C_2$ is from 0.5:1 to 2.33:1.

**7.** A fully aromatic thermotropic polyester and polyesteramide as claimed in any of claims 1 to 6, obtainable by single-stage polycondensation of components A, $B_1$, $B_2$, $C_1$, $C_2$ and $C_3$ in the melt, in the presence of a 5-60% molar excess, based on the total content of OH groups, of an anhydride of an alkanecarboxylic acid of 2 to 6 carbon atoms.

**8.** A process for the preparation of a fully aromatic thermotropic polyester and polyesteramide as claimed in any of claims 1 to 7 by single-stage polycondensation in the melt, in the presence of an anhydride of an alkanecarboxylic acid of 2 to 6 carbon atoms, wherein

a) the components A, $B_1$, $B_2$, $C_1$, $C_2$ and $C_3$ are reacted in the presence of a 5-60% molar excess, based on the total content of OH groups, of the anhydride of the alkanecarboxylic acid and, if desired,

b) the resulting product is subjected to postcondensation in the solid phase.

**9.** Use of a fully aromatic thermotropic polyester and polyesteramide as claimed in any of claims 1 to 7 or obtained as claimed in claim 8 for producing fibers, filaments, films and moldings.

**10.** A dimensionally stable molding containing, as an essential component, a fully aromatic thermotropic polyester or polyesteramide as claimed in any of claims 1 to 7 or obtained as claimed in claim 8.

**Revendications**

**1.** Polyesters et polyesteramides thermotropes totalement aromatiques à base de

A) 30 à 60% en moles d'acide 4-hydroxybenzoïque

B) 20 à 35% en moles d'un mélange de

$B_1$) acide téréphtalique et

$B_2$) acide isophtalique,

le rapport molaire $B_1$:$B_2$ étant compris dans l'intervalle de 1,04:1 à 19:1, et

C) 20 à 35% en moles d'un mélange de

$C_1$) hydroquinone

$C_2$) 4,4'-dihydroxydiphényle et

$C_3$) au total de 0,5 à 5 % en moles d'un ou plusieurs des composants suivants

$C_{31}$) 2,7-dihydroxynaphtalène et/ou

$C_{32}$) 1,3-dihydroxybenzène et/ou

$C_{33}$) un dérivé dihydroxylé aromatique de formule générale I

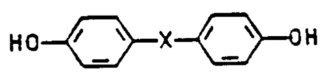

(I)

dans laquelle X est $-CH_2-$, $-C(CH_3)_2$, -S-, $-SO_2-$, -O- ou -CO-, ou un de ses dérivés substitués sur le noyau par des radicaux chloro, bromo, aryle ou alkyle ou alcoxy en $C_1$-$C_8$, et/ou

$C_{34}$) un composé de formule générale II

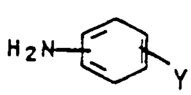

(II)

dans laquelle Y est $-NH_2$ ou -OH et les substituants se trouvent en position méta ou para l'un par rapport à l'autre, ou un de ses dérivés substitués sur le noyau par des radicaux chloro, bromo, aryle ou alkyle ou alcoxy en $C_1$-$C_8$,

le rapport molaire $C_1$:$C_2$ étant compris entre 0,1:1 et 2,67:1 et le rapport molaire B:C étant compris entre 0,9:1 et 1,1:1.

**2.** Polyesters thermotropes totalement aromatiques selon la revendication 1, caractérisés en ce que le composant $C_3$ est le 2,7-dihydroxynaphtalène ($C_{31}$) et/ou le 1,3-dihydroxybenzène ($C_{32}$).

3. Polyesters thermotropes totalement aromatiques selon la revendication 1, caractérisés en ce que $C_3$ est un dérivé dihydroxylé aromatique de formule générale I dans laquelle X est $-C(CH_3)_2$, -S-, $-SO_2$, -O- ou -CO-.

4. Polyesteramides thermotropes totalement aromatiques selon la revendication 1, caractérisés en ce que le composant $C_{34}$ est le 4-aminophénol et/ou le 3-aminophénol.

5. Polyesters et polyesteramides thermotropes totalement aromatiques selon les revendications 1 à 4, caractérisés en ce que le rapport molaire des composants $B_1$:$B_2$ est compris entre 1,5:1 et 10:1.

6. Polyesters et polyesteramides thermotropes totalement aromatiques selon les revendications 1 à 5, caractérisés en ce que le rapport molaire des composants $C_1$:$C_2$ est compris entre 0,5:1 et 2,33:1.

7. Polyesters et polyesteramides thermotropes totalement aromatiques selon les revendications 1 à 6, préparés par polycondensation en une seule étape des composants A, $B_1$, $B_2$, $C_1$, $C_2$ et $C_3$ en masse fondue, en présence d'un excès de 5 à 60% en moles, par rapport à la teneur totale en groupements OH, d'anhydrides d'acides alcanoïques ayant de 2 à 6 atomes de carbone.

8. Procédé de préparation de polyesters et de polyesteramides thermotropes totalement aromatiques selon les revendications 1 à 7 par polycondensation en une seule étape en nasse fondue en présence d'anhydrides d'acides alcanoïques ayant de 2 à 6 atomes de carbone, caractérisé en ce que
   a) an fait réagir les composants A, $B_1$, $B_2$, $C_1$, $C_2$ et $C_3$ en présence d'un excès de 5 à 60% en moles, par rapport à la teneur totale en groupements OH, d'anhydrides d'acides alcanoïques et, éventuellement,
   b) on soumet le produit obtenu à une post-condensation en phase solide.

9. Utilisation des polyesters et polyesteramides thermotropes totalement aromatiques selon les revendications 1 à 7 ou obtenus selon la revendication 8, pour la préparation de fibres, filaments, feuilles et pièces moulées.

10. Pièces moulées dimensionnellement stables, contenant conme composants essentiels des polyesters et/ou des polyesteramides thermotropes totalement aromatiques selon les revendications 1 à 7 ou obtenus selon la revendication 8.